Europäisches Patentamt

European Patent Office

Office européen des brevets

(11) Veröffentlichungsnummer: **0 439 703 A1**

## EUROPÄISCHE PATENTANMELDUNG

(21) Anmeldenummer: 90121689.5

(22) Anmeldetag: 13.11.90

(51) Int. Cl.5: **B23P 11/00**, B21D 39/06, B21D 53/84, C21D 5/00

(30) Priorität: 29.12.89 DE 3943262

(43) Veröffentlichungstag der Anmeldung:
07.08.91 Patentblatt 91/32

(84) Benannte Vertragsstaaten:
CH DE ES FR GB IT LI

(71) Anmelder: Balcke-Dürr AG
Homberger Strasse 2 Postfach 1240
W-4030 Ratingen 1(DE)

(72) Erfinder: Podhorsky, Miroslan, Dr.
Am Hang 5
W-4030 Ratingen 1(DE)
Erfinder: Holten, Wolfgang
Mörsenbroicher Weg 199
W-4000 Düsseldorf 30(DE)
Erfinder: Hartmann, Uwe
Schumannstrasse 10
W-4030 Ratingen 8(DE)

(74) Vertreter: Patentanwälte Dipl.-Ing. Alex
Stenger Dipl.-Ing. Wolfram Watzke Dipl.-Ing.
Heinz J. Ring
Kaiser-Friedrich-Ring 70
W-4000 Düsseldorf 11(DE)

(54) **Verfahren zur Erhöhung der Haftung zwischen einer Hohlwelle und auf ihr befestigten Teilen.**

(57) Die Erfindung betrifft ein Verfahren zur Erhöhung der Haftung zwischen einer Hohlwelle 1 und auf dieser Hohlwelle 1 durch hydraulisches Aufweiten der Hohlwelle 1 befestigten Teilen 2 aus Stahl oder Grauguß, vorzugsweise Sphäroguß. Die zu befestigenden Teile 2 werden vor ihrem Aufbringen auf die Hohlwelle 1 zur Erhöhung der Streckgrenze einer Wärmebehandlung unterzogen, indem sie auf eine Temperatur zwischen 700 und 1000° C erwärmt und für eine bestimmte Verweilzeit auf dieser Temperatur gehalten werden. Anschließend werden die Teile 2 langsam auf Umgebungstemperatur abgekühlt, wonach abschließend ein Anlassen erfolgt.

EP 0 439 703 A1

# VERFAHREN ZUR ERHÖHUNG DER HAFTUNG ZWISCHEN EINER HOHLWELLE UND AUF IHR BEFESTIGTEN TEILEN

Die Erfindung betrifft ein Verfahren zur Erhöhung der Haftung zwischen einer Hohlwelle und auf dieser Hohlwelle durch hydraulisches Aufweiten der Hohlwelle befestigten Teilen aus Stahl oder Grauguß, vorzugsweise Sphäroguß.

Es sind verschiedene Verfahren bekannt, um Bauteile, wie beispielsweise Nocken, Zahnräder oder Lagerringe auf einer Hohlwelle, beispielsweise einer Nockenwelle zu befestigen. Ein besonders einfaches und preisgünstiges Verfahren besteht darin, die zu befestigenden Teile, die mit einer den Außendurchmesser der Hohlwelle geringfügig übersteigenden Öffnung versehen sind, auf die Hohlwelle an der vorgesehenen Stelle und mit entsprechender Ausrichtung aufzubringen und anschließend die Hohlwelle durch Einbringen einer Druckflüssigkeit aufzuweiten. Bei diesem Aufweiten erfolgt eine plastische Verformung der Hohlwelle und möglicherweise auch der auf ihr zu befestigenden Teile. Die Haftung zwischen der Hohlwelle und den auf dieser befestigten Teilen hängt von der Größe der Rückverformung einerseits der Hohlwelle und andererseits der auf ihr angeordneten Teile ab. Eine ausreichende Haftung wird nur dann erzielt, wenn die nach Abbau des Aufweitdruckes eintretende Rückverformung der auf der Hohlwelle angeordneten Teile größer ist als die Rückverformung der Hohlwelle.

In besonderen Fällen, beispielsweise bei der Herstellung von Nockenwellen für Verbrennungsmotoren, ist es vorteilhaft, wenn die auf der Hohlwelle zu befestigenden Teile aus Grauguß, vorzugsweise Sphäroguß hergestellt werden, weil derartige Gußteile eine erhöhte Abriebfestigkeit und bessere Laufeigenschaften aufweisen. Da Grauguß, beispielsweise Sphäroguß, sowie einige Stahllegierungen eine geringe Streckgrenze aufweisen, ergibt sich bei diesen Materialien eine geringere Rückverformung nach der Druckentlastung als beim Material der Hohlwelle, die üblicherweise aus Stahl hergestellt ist. Die geringe Streckgrenze der auf der Hohlwelle angeordneten Teile hat bei gegebenem Elastizitätsmodul zur Folge, daß sich die auf der Hohlwelle angeordneten Teile nach der Druckentlastung der zum Aufweiten der Hohlwelle verwendeten Druckflüssigkeit weniger stark rückverformen als die Hohlwelle in den aufgeweiteten Bereichen; die Teile sitzen demzufolge trotz des hydraulischen Aufweitvorganges nur lose auf der Hohlwelle.

Der Erfindung liegt die Aufgabe zugrunde, ein Verfahren zur Erhöhung der Haftung zwischen einer Hohlwelle und auf dieser Hohlwelle durch hydraulisches Aufweiten der Hohlwelle befestigten Teilen aus Stahl oder Grauguß zu schaffen, ohne daß diese Teile aus sehr teuren Stahl- oder Gußlegierungen hergestellt sein müssen.

Die Lösung dieser Aufgabenstellung durch die Erfindung ist dadurch gekennzeichnet, daß die zu befestigenden Teile vor ihrem Aufbringen auf die Hohlwelle zur Erhöhung der Streckgrenze einer Wärmebehandlung unterzogen werden, indem sie auf eine Temperatur zwischen 700° und 1000° c erwärmt, für eine bestimmte Verweilzeit auf dieser Temperatur gehalten und anschließend langsam auf Umgebungstemperatur abgekühlt werden, wonach anschließend ein Anlassen mit notwendiger Verweilzeit erfolgt.

Durch die erfindungsgemäße Erhöhung der Streckgrenze, beispielsweise bei einem Grauguß GGG 50 von 320 auf 450 N/mm² wird bei gleichbleibendem Elastizitätsmodul und nur geringfügig zunehmender Härte die Rückverformung des auf der Hohlwelle angeordneten Teils nach Abbau des Aufweitdruckes proportional zur Erhöhung der Streckgrenze vergrößert. Das Teil verformt sich demzufolge nach der Druckentlastung stärker zurück als der innerhalb des Teils aufgeweitete Bereich der Hohlwelle. Hierdurch vergrößert sich die Haftung zwischen der Hohlwelle und dem Teil entsprechend der Erhöhung der Streckgrenze aufgrund des erfindungsgemäßen Verfahrens. Dieses Verfahren ermöglicht somit unter Verwendung üblicher und preiswerter Materialien eine zuverlässige Befestigung von Bauteilen, wie Nocken, Zahnrädern und Lagerringen aus Grauguß und bestimmten Stählen auf einer Hohlwelle durch hydraulisches Aufweiten dieser Hohlwelle zumindest im Bereich der aufgebrachten Teile.

Bei Teilen aus duktilem Sphäroguß erfolgt gemäß einem weiteren Merkmal der Erfindung die Wärmebehandlung über eine Verweilzeit von etwa 2 Stunden mit etwa 900° C. Das anschließende Anlassen wird vorzugsweise bei etwa 250 bis 300° C mit einer Verweilzeit von etwa 2 Stunden durchgeführt.

Das Aufwärmen auf Temperaturen zwischen 700 und 1000° C kann in an sich bekannter Weise unter Schutzgasatmosphäre erfolgen, um Verzunderungen der Oberflächen zu verhindern. Bei einer bevorzugten Ausführungsform der Erfindung geschieht das langsame Abkühlen der Teile unterhalb einer Temperatur von 500° C an der Luft.

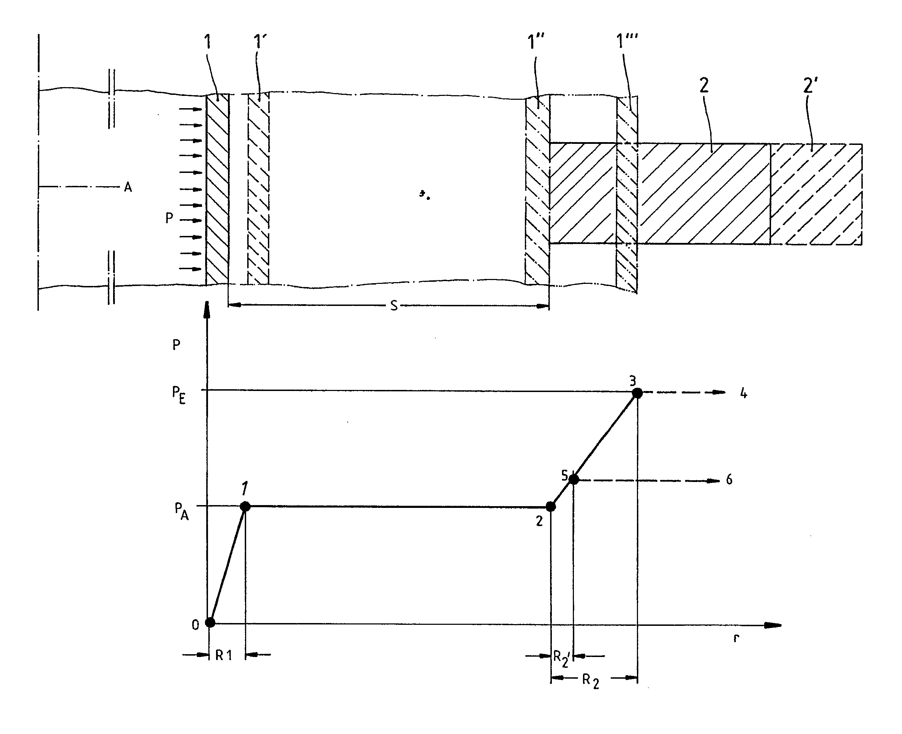

Auf der Zeichnung ist anhand eines Ausführungsbeispiels die Wirkung des erfindungsgemäßen Verfahrens erläutert, und zwar zeigt die Zeichnung im unteren Teil ein Druck-Weg-Diagramm bei der Befestigung eines Teiles auf einer Hohlwelle mittels Aufweiten der Hohlwelle und im oberen Teil die zugehörigen Verformungen eines mit einem zu befestigenden Teil versehenen Hohlwellenabschnitts.

Mit ausgezogenen Linien ist im oberen Teil der Zeichnung der Abschnitt einer Hohlwelle 1 gezeichnet, deren Mittelachse A strichpunktiert im linken oberen Teil der Zeichnung zu erkennen ist. Aus Platzgründen ist der effektive Abstand zwischen der Mittelachse A und der Wandung des Rohrabschnittes verkürzt dargestellt, wie in der Zeichnung angedeutet ist. Auf dieser Hohlwelle 1 ist ein zu befestigendes Teil in Form eines Nockens 2 angeordnet; der dargestellte Abschnitt der Hohlwelle 1 und der Hocken 2 sind im Schnitt und im Ausgangszustand dargestellt. Die in dem zu befestigenden Nocke 2 ausgebildete Bohrung ist größer als der Außendurchmesser der Hohlwelle 1. Das zur Verdeutlichung übertrieben groß dargestellte Spiel S zwischen der Innenwand des Nockens 2 und der Außenfläche der Hohlwelle 1 ist eingezeichnet.

Aus dem im unteren Teil der Zeichnung dargestellten Diagramm geht der Verlauf des Aufweitdruckes P hervor, der durch Einbringen einer Hydraulikflüssigkeit in das Innere der Hohlwelle 1 erzeugt wird. Dieser Aufweitdruck P wird vom Wert 0 auf einen Anfangsdruck $P_A$ erhöht; während dieser Druckerhöhung erfolgt eine elastische Aufweitung der Hohlwelle 1, die im Punkt 1 des Diagramms abgeschlossen ist. Dieser Zustand des Hohlwellenabschnittes ist gestrichelt in der oberen Darstellung gezeichnet und mit der Bezugsziffer 1' versehen.

Beim Ausführungsbeispiel wird durch diese elastische Aufweitung der Hohlwelle 1 das vorhandene Spiel S zwischen Hohlwelle 1 und Hocken 2 nicht beseitigt. Durch das Aufrechterhalten des Anfangsdruckes $P_A$ erfolgt jedoch anschließend eine sich an die elastische, durch die Bezugsziffer 1' gekennzeichnete Aufweitung anschließende plastische Verformung des Hohlwellenabschnittes, die strichpunktiert in der oberen Darstellung der Zeichnung eingezeichnet und durch die Bezugsziffer 1'' gekennzeichnet ist. Nach dieser Aufweitung der Hohlwelle 1 im plastischen Bereich liegt die Mantelfläche des Hohlwellenabschnittes an dem bisher unverformten Hocken 2 an. Im Diagramm ist dieser Zustand durch den Punkt 2 gekennzeichnet.

Wenn nunmehr der Aufweitdruck P vom Anfangsdruck $P_A$ auf einen Enddruck $P_E$ erhöht wird, wie dies durch Erreichen des Punktes 3 im Diagramm dargestellt ist, ergibt sich nunmehr eine weitere Aufweitung des Hohlwellenabschnittes, die durch die Bezugsziffer 1''' gekennzeichnet ist. Gleichzeitig erfolgt hierbei eine Aufweitung des Nocken 2, die gestrichelt dargestellt und durch die Bezugsziffer 2' gekennzeichnet ist. Dieses Aufweiten des Nockens 2 kann im elastischen oder im elastischen plus plastischen Bereich erfolgen. Sofern eine plastische Verformung auch des Nockens 2 stattfindet, wird der angedeutete Punkt 4 im Diagramm erreicht.

Wenn nunmehr der Aufweitdurck P auf Null abgebaut wird, verformt sich sowohl die Hohlwelle 1 als auch der Nocken 2 entsprechend ihrer zuvor erfolgten elastischen Aufweitung zurück. Diese Rückverformungen sind im Diagramm eingezeichnet.

Die der elastischen Aufweitung entsprechende Rückverformung der Hohlwelle 1 ist mit $R_1$ und die Rückverformung des Nockens 2 mit $R_2$ gekennzeichnet. Beide Werte hängen ebenso wie der elastische Aufweitbereich von der Streckgrenze des jeweiligen Materials ab.

Nur wenn die elastische Rückverformung $R_2$ des Nockens 2 größer ist als die elastische Rückverformung $R_1$ der Hohlwelle 1, ergibt sich nach Abbau des Aufweitdruckes P ein fester Sitz des Nockens 2 auf der Hohlwelle 1. Die Haltekraft ist hierbei um so größer, je größer die Differenz zwischen den Rückverformungen $R_2$ und $R_1$ ist.

Im Diagramm ist mit gestrichelten Linien eine Situation eingezeichnet, die sich ergibt, wenn die Streckgrenze des Nockens 2 aufgrund des für den Nocken 2 verwendeten Materials niedriger liegt als die Streckgrenze des zur Herstellung der Hohlwelle 1 verwendeten Materials. In diesem Fall ist die elastische Aufweitung des Nockens 2 bereits im Punkt 5 des Diagramms beendet. Auch die sich an die elastische Aufweitung anschließende plastische Ausdehnung des Nockens 2 in Richtung auf den Punkt 6 bringt keine Vergrößerung der elastischen Rückverformung, die im Diagramm mit $R_2'$ eingezeichnet ist. In einem solchen Fall würde der Nokken 2 nach Abbau des Aufweitdruckes P zwar ohne Spiel, jedoch lose auf der Hohlwelle 1 sitzen.

Um auch vorzugsweise aus Sphäroguß hergestellte Nocken 2 mit ausreichender Haftung auf der Hohlwelle 1 befestigen zu können, werden die zu befestigenden Teile vor ihrem Aufbringen auf die Hohlwelle 1 zur Erhöhung der Streckgrenze einer Wärmebehandlungunterzogen, indem sie auf eine Temperatur zwischen 700 und 1000° C erwärmt und für eine bestimmte Verweilzeit auf dieser Temperatur gehalten werden. Anschließend werden die zu befestigenden Teile langsam auf Umgebungstemperatur abgekühlt. An den Abkühlvorgang schließt sich ein Anlassen mit der jeweils notwendigen Verweilzeit an. Bei der Verwendung von duktilem Sphäroguß zur Herstellung der Nocken 2 erfolgt die Wärmebehandlung über eine Verweilzeit von etwa 2 Stunden mit etwa 900° C; das anschließende Anlassen erfolgt bei etwa 250 bis 300° C mit einer Verweilzeit von etwa 2 Stunden. Hierbei kann das Aufwärmen in an sich bekannter Weise unter Schutzgasatmoshäre erfolgen, um unerwünschte Verzunderungen zu vermeiden. Das langsame Abkühlen wird unterhalb einer Temperatur von 500° C am besten an der Luft vergenommen.

Durch die hiermit verbundene Erhöhung der Streckgrenze läßt sich die Haftung zwischen der Hohlwelle 1 und der auf dieser Hohlwelle 1 durch hydraulisches Aufweiten befestigten Nocken 2 auf Werte erhöhen, die auch für aus Stahl- oder Grauguß hergestellte Teile ausreichend sind. Die im Diagramm gestrichelt eingezeichneten Verhältnisse ergeben sich beispielsweise für Sphäroguß GGG 50, wogegen die mit ausgezogenen Linien dargestellten Verhältnisse für einen nach dem voranstehend beschriebenen Verfahren wärmebehandelten Sphäroguß GGG 50 gelten. Während die Streckgrenze bei unbehandeltem GGG 50 bei etwa 320 N/mm² liegt, kann durch das voranstehend beschriebene Verfahren die Streckgrenze auf etwa 450 N/mm² erhöht werden, wobei sich die Härte lediglich von 220 auf 260 HB erhöht.

**Bezugszeichenliste**

| | |
|---|---|
| 1 | Hohlwelle |
| 2 | Nocken |
| A | Mittelachse |
| P | Aufweitdruck |
| $P_A$ | Anfangsdruck |
| $P_E$ | Enddruck |
| $R_1$ | elastische Rückverformung der Hohlwelle 1 |
| $R_2$ | elastische Rückverformung des Nockens 2 |
| $R_{2'}$ | elastische Rückverformung des Nockens 2 |
| S | Spiel |

**Patentansprüche**

1. Verfahren zur Erhöhung der Haftung zwischen einer Hohlwelle und auf dieser Hohlwelle durch hydraulisches Aufweiten der Hohlwelle befestigten Teilen aus Stahl oder Grauguß, vorzugsweise Sphäroguß,
   **dadurch gekennzeichnet,**
   daß die zu befestigenden Teile (2) vor ihrem Aufbringen auf die Hohlwelle (1) zur Erhöhung der Streckgrenze einer Wärmebehandlung unterzogen werden, indem sie auf eine Temperatur zwischen 700 und 1000° C erwärmt, für eine bestimmte Verweilzeit auf dieser Temperatur gehalten und anschließend langsam auf Umgebungstemperatur abgekühlt werden, wonach anschließend ein Anlassen mit notwendiger Verweilzeit erfolgt.

2. Verfahren nach Anspruch 1, dadurch gekennzeichnet, daß bei Teilen (2) aus duktilem Sphäroguß die Wärmebehandlung über eine Verweilzeit von etwa 2 Stunden mit etwa 900° C erfolgt.

3. Verfahren nach Anspruch 1 und 2, dadurch gekennzeichnet, daß das anschließende Anlassen bei etwa 250 bis 300° C mit einer Verweilzeit von etwa 2 Stunden erfolgt.

4. Verfahren nach Anspruch 1 bis 3, dadurch gekennzeichnet, daß das Aufwärmen auf Temperaturen zwischen 700 und 1000° C in an sich bekannter Weise unter Schutzgasatmosphäre erfolgt.

5. Verfahren nach einem der Ansprüche 1 bis 4, dadurch gekennzeichnet, daß das langsame Abkühlen der Teile (2) unterhalb einer Temperatur von 500° C an der Luft erfolgt.

**Europäisches Patentamt**

# EUROPÄISCHER RECHERCHENBERICHT

Nummer der Anmeldung

**EP 90 12 1689**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 265 663 (UNI-CARDAN) <br> * Spalte 5, Zeilen 18 - 38 * <br> — — — | 1 | B 23 P 11/00 <br> B 21 D 39/06 <br> B 21 D 53/84 |
| A | FR-A-2 351 726 (BALCKE-DURR) <br> * Figur 2 * <br> — — — | 1 | C 21 D 5/00 |
| A | METAL PROGRESS. vol. 119, no. 5, April 1981, METALS PARK, OHIO US Seiten 25 - 31; Rossi, Gupta: "Austempering of nodular cast iron automobile components" <br> * das ganze Dokument * <br> — — — | 1-5 | |
| P,A | EP-A-0 374 389 (EMITEC) <br> — — — | | |
| A | FR-A-2 626 951 (EMITEC) <br> — — — — — | | |

| RECHERCHIERTE SACHGEBIETE (Int. Cl.5) |
|---|
| B 21 D <br> B 23 P <br> C 21 D <br> F 01 L |

Der vorliegende Recherchenbericht wurde für alle Patentansprüche erstellt

| Recherchenort | Abschlußdatum der Recherche | Prüfer |
|---|---|---|
| Den Haag | 05 April 91 | RIS M. |